# EUROPÄISCHE PATENTSCHRIFT

(11) **EP 0 705 388 B1**
(45) Veröffentlichungstag und Bekanntmachung des Hinweises auf die Patenterteilung: **22.01.1997**
(21) Anmeldenummer: 94917510.3
(22) Anmeldetag: 20.06.1994
(51) Int. Cl.: F16B 2/06, F16L 3/24

(54) **HALTER**
HOLDER
DISPOSITIF DE RETENUE

(30) Priorität: 23.06.1993 AT 1234/93
(43) Veröffentlichungstag der Anmeldung: 10.04.1996
(73) Patentinhaber: Leblhuber, Johann, A-4501 Neuhofen (AT)
(72) Erfinder: Leblhuber, Johann, A-4501 Neuhofen (AT)
(74) Vertreter: Hübscher, Heiner, Dipl.-Ing.
(86) Internationale Anmeldenummer: AT9400079
(87) Internationale Veröffentlichungsnummer: WO9500763

(56) Entgegenhaltungen:
- GB-A- 1 489 925
- US-A- 1 785 870
- US-A- 2 534 739
- US-A- 5 072 903

## Beschreibung

Die Erfindung bezieht sich auf einen Halter mit einem Befestigungsteil und einem Aufnahmeteil, wobei Befestigungsteil und Aufnahmeteil durch Umformen eines Zuschnittes hergestellt sind und der Befestigungsteil und/oder der Aufnahmeteil wenigstens ein Schraubenloch zum Einsetzen einer Klemmschraube aufweisen.

Halter als Verbindungselement zweier oder mehrerer Bau- oder Konstruktionsteile bzw. als Befestigungselement für den Einsatz verschiedener Steuergeräte, Sensoren u. dgl. Meßeinrichtungen werden auf allen Gebieten der Technik, insbesondere der Fördertechnik, Installationstechnik, Meß- und Steuertechnik u. dgl., in verschiedensten Formen verwendet, wobei bisher meist mehrteilige, aus Gußstücken zusammengesetzte Halter Verwendung finden. Die bekannten Halter sind daher recht aufwendig in ihrer Herstellung, lassen sich nur beschränkt an ihren jeweiligen Einsatzzweck anpassen und sind wegen ihrer Mehrteiligkeit auch nur umständlich zu handhaben.

Aus der US-A 1 785 870 ist auch schon ein Halter für Rohre od. dgl. bekannt, der aus einem Blechzuschnitt besteht und einen zu einer Schelle formbaren Aufnahmeteil und einen als Lasche abstehenden Befestigungsteil bildet. Die Lasche weist ein Rundloch zur Befestigung auf und die Schelle läßt sich über eine Klemmschraube mit einwärts abgewinkelten Schenkelenden am zu haltenden Rohr od. dgl. festklemmen, wobei die durch Rundlöcher in beiden Schellenschenkeln hindurchgesteckte Klemmschraube die abgewinkelten Schenkelenden in Randschlitzen durchsetzt, um Relativbewegungen beim Festklemmen zu ermöglichen. Dieser Halter bietet daher wegen seiner einen Befestigungsschraube keine drehfeste Abstützung an einem Bauteil und die Betätigung der Klemmschraube für die Schelle ist wegen einer fehlenden Verdrehsicherung recht umständlich.

Der Erfindung liegt daher die Aufgabe zugrunde, diese Mängel zu beseitigen und einen Halter der eingangs geschilderten Art zu schaffen, der rationell in unterschiedlichster Gestalt herstellbar ist und sich durch seine geschickte und vielfältige Anwendbarkeit bei stets lagesicherer Abstützung auszeichnet.

Die Erfindung löst diese Aufgabe dadurch, daß das Schraubenloch oder zumindest eines der Schraubenlöcher als im Randbereich des Zuschnittes angeordnetes eckiges Loch, das mit einer seiner Ecken den Randverlauf durchbricht, ausgebildet ist. Durch die Anwendung des Stanz-Biegeverfahrens können die Halter auf besonders einfache Weise aus Blech od. dgl. Flachmaterial mit minimalem Aufwand erzeugt werden, wobei sich eine große gestalterische Freiheit für den Halter eröffnet, noch dazu wenn Aufnahmeteil und Befestigungsteil durch einen Stegteil miteinander verbunden sind. Die entstehenden Halter sind meist einstückig, sie können aber bei komplizierten Formen auch aus mehreren vorgeformten Teilstücken zusammengeschweißt sein, und ermöglichen die Handhabung von Aufnahmeteil und Befestigungsteil jeweils für sich, wobei die Befestigung einfach über Klemmschrauben erfolgt. Durch die spezielle Anordnung von eckigen Schraubenlöchern im Randbereich des Befestigungs- bzw. Aufnahmeteiles können einerseits Klemmschrauben mit Kantansätzen, wie Torbandschrauben od. dgl., eingesetzt werden, die bei ihrer Verwendung drehgesichert sind, und anderseits stehen durch die Positionierung der Schraubenlöcher nahe am Rand Schraubenkopf und Mutter der eingesetzten Klemmschrauben entsprechend weit über den Rand vor, wodurch im jeweiligen Überlappungsbereich ein für die gewünschte Befestigung ausreichender Klemmeffekt entsteht. So läßt sich auch mit einer Schraube das Festklemmen des jeweiligen Halterteils an einer tragenden Montageplatte od. dgl. oder mit einem zu haltenden Gegenstand erreichen, was dann bei kurzem oder gänzlich fehlenden Verbindungssteg dennoch das voneinander unabhängige Nutzen und Handhaben von Aufnahmeteil und Befestigungsteil gewährleistet. Die Halter sind vor allem für den Einsatz bei Maschinenteilen geeignet, deren Wandstärke etwa der Blechstärke der Halter entspricht, so daß der in eine Wandausnehmung eingepaßte Halter und der Maschinenteil einwandfrei miteinander verspannt werden können, doch lassen sich selbstverständlich mit diesen Schraubenlöchern auch andere Befestigungsschrauben verwenden und es sind auch zusätzlich beliebige andere Befestigungsmöglichkeiten anwendbar.

Durch eine entsprechende Ausgestaltung des Zuschnittes und dem nachfolgenden Umformen können Halter verschiedenster Raumform hergestellt werden, wobei der Ausgestaltung von Befestigungsteil und Aufnahmeteil praktisch keine Grenzen gesetzt sind. So wird zwar der Aufnahmeteil meist als Zunge oder Lappen für eine Umformung zu einer Schelle für eine Stab- oder Rohrhalterung oder als ebene Platte zum Ansetzen flacher Werkstücke od. dgl. ausgebildet, es können aber auch spezielle, an die verschiedensten Einsatzzwecke und aufzunehmenden Geräte angepaßte Aufnahmeteile, wie Aufnahmehaken oder -ösen, Klammern oder Führungsschienen usw. ausgestaltet werden. Ähnliches gilt für den Befestigungsteil, wobei von einfachsten Befestigungsplatten bis zu speziell geformten Befestigungsfüßen u. dgl. jede Formenfreiheit besteht und es ist selbstverständlich auch möglich, die Funktion von Aufnahmeteil und Befestigungsteil zu tauschen und gegebenenfalls den Befestigungsteil als Aufnahmeteil und den Aufnahmeteil als Befestigungsteil einzusetzen.

Eine spezielle Halterform ergibt sich dadurch, daß der Befestigungsteil einen Befestigungsfuß bildet, der innerhalb eines durch Randbögen des Fußes bestimmten Kreises liegt, da ein solcher Halter in eine diesem Kreis entsprechende Bohrung eines Maschinenteiles eingesetzt und in beliebiger Drehstellung mit Hilfe der Klemmschrauben festgespannt werden kann. Der Fuß sitzt dabei innerhalb dieser Bohrung des Maschinenteiles, dessen Wandstärke etwa der Blechstärke des Fußes entspricht, und kann bereits mit einer einzigen Klemmschraube, die mit Schraubenkopf und Mutter bzw. entsprechenden Beilagscheiben den Maschinenteil und den Fuß überlappend übergreift, fixiert werden. Durch die exzentrische Lage der Klemmschraube gegenüber dem Fuß und der Bohrung kommt es auch zu einer Verdrehsicherung, so daß schon eine einzige Klemmschraube hervorragende Abstützbedingungen für den Halter gewährleistet.

Weist der Befestigungsfuß eine radial abstehende Fixiernase auf, für welche Fixiernase im den Halter aufnehmenden Maschinenteil eine entsprechende Ausnehmung oder Bohrung vorgesehen ist, läßt sich auch auf diese Weise mit nur einer Klemmschraube eine exakt drehsichere Halterung erreichen.

Vorteilhaft ist es auch, wenn bei einem Befestigungsteil, dessen Randverlauf wenigstens ein Paar einander gegenüberliegender, paralleler Geradabschnitte aufweist, die Schraubenlöcher im Bereich der Geradabschnitte vorgesehen sind. Ein solcher Befestigungsteil erlaubt den Einsatz eines Halters in Führungsschienen oder Nuten, wobei die Geradabschnitte an die Nutenweite angepaßt sind und sich der Befestigungsteil daher über die Klemmschrauben an den Nutenrändern festspannen läßt, wobei die Geradabschnitte dann eine drehsichere Abstützung garantieren. Sind mehrere zueinander winkelversetzte Geradabschnitte vorgesehen, ist wiederum eine Befestigung des Halters in verschiedenen Drehstellungen möglich.

Bildet der Aufnahmeteil zwischen einem Geradabschnitt des Randverlaufes und einem dazu parallelen Längsschlitz einen Aufnahmesteg, der durch endseitige Kröpfungen in eine mit Abstand zur Ebene des übrigen Aufnahmeteils liegende Parallelebene herausgebogen ist und entlang der Schlitzkante und/oder des Geradabschnittes ein Schraubenloch aufweist, können Bauteile mit einem an den Aufnahmesteg angepaßten Befestigungsschlitz auf diesen Steg aufgesteckt und dadurch form- und kraftschlüssig am Halter montiert werden. Ist dabei der Befestigungsschlitz länger als der herausgebogene Stegbereich, läßt sich der Bauteil schiebeverstellen und so bei der Montage justieren.

Zweckmäßig ist es dabei, wenn der Aufnahmesteg gegenüber der vertikalen Montagerichtung schräggeneigt verläuft, wobei vorzugsweise die Schlitzkante und/oder der Geradabschnitt einen freigestellten Mittelabschnitt aufweisen, da so durch eine Schiebeverstellung auch eine Höheneinstellung der Montageposition erreicht wird.

In der Zeichnung ist der Erfindungsgegenstand schematisch in mehreren Ausführungsbeispielen veranschaulicht, und zwar zeigen
- Fig. 1: einen Zuschnitt eines erfindungsgemäßen Halters in Draufsicht und die
- Fig. 2 und 3: den aus diesem Zuschnitt hergestellten Halter in zwei Montagestellungen jeweils in teilgeschnittener Seitenansicht,
- Fig. 4 und 5: ein weiteres Ausführungsbeispiel eines erfindungsgemäßen Halters als Zuschnitt bzw. in einer Montagestellung jeweils in Draufsicht,
- Fig. 6 und 7: ein anderes Ausführungsbeispiel eines erfindungsgemäßen Halters als Zuschnitt und in einer Montagestellung jeweils in Draufsicht,
- Fig. 8 und 9: ein anderes Ausführungsbeispiel eines erfindungsgemäßen Halters wiederum als Zuschnitt bzw. in einer Montagestellung in Draufsicht, die
- Fig. 10 und 11: den Befestigungsteil eines abgeänderten Ausführungsbeispieles als Zuschnitt und in einer Montagestellung wiederum in Draufsicht und
- Fig. 12 und 13: ein weiteres Ausführungsbeispiel eines erfindungsgemäßen Halters an Hand eines Aufnahmeteiles als Zuschnitt und in fertiggestellter Form in Draufsicht bzw. im Schaubild.

Um Halter rationell herstellen und dabei ihre Form gut an den jeweiligen Einsatzzweck anpassen zu können, werden diese Halter durch Umformen eines einstückigen Stanzteiles gefertigt, dessen Gestalt dem Netz der geometrischen Haltergrundform entspricht, welcher Stanzteil dann zum jeweiligen Halter gebogen wird.

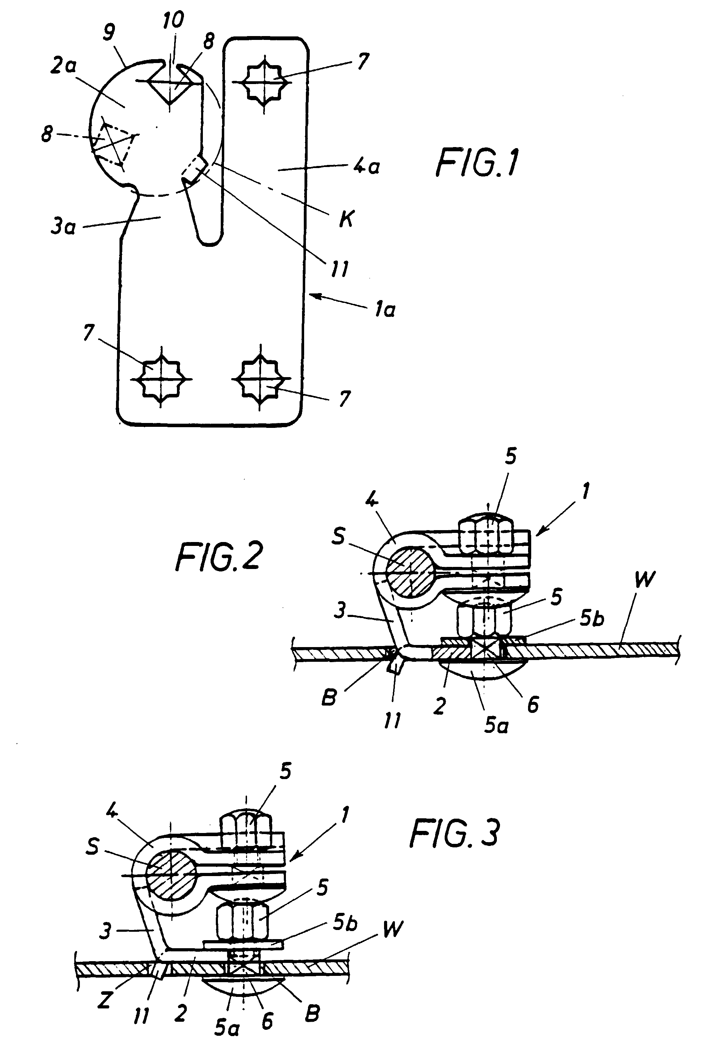

Gemäß dem Ausführungsbeispiel nach Fig. 1 - 3 ist ein Halter 1 zur Befestigung eines Stabes S od.dgl. an der Wand W eines nicht weiter dargestellten Maschinenteiles vorgesehen, wozu dieser Halter einen Befestigungsteil 2 und einen mit diesem Befestigungsteil 2 über einen Stegteil 3 verbundenen Aufnahmeteil 4 aufweist. Klemmschrauben 5 mit Vierkantansatz 6 dienen einerseits zur Befestigung des Befestigungsteiles 2 an der Wand W und anderseits zum Festspannen der vom Aufnahmeteil 4 gebildeten, die Stange S umschließenden Schelle. Zur Herstellung dieses Halters 1 gibt es einen Zuschnitt la mit einem rechteckigen Lappen 4a zur Ausformung des Aufnahmeteils 4 und einen über ein Verbindungsstück 3a als Stegteil 3 angesetzten Fuß 2a als Befestigungsteil 2. Der Verbindungssteg wird gegenüber dem Fuß 2a abgewinkelt und der restliche Zuschnitt la zusammen mit dem Lappen 4a zur Aufnahmeschelle gebogen, wobei eckige Kantlöcher 7 zum Einsatz der für die Schelle vorgesehenen Klemmschrauben vorgesehen sind. Im Fuß 2a gibt es als Schraubenloch ein eckiges Loch 8, das im Randbereich 9 liegt und mit einer seiner Ecken 10 den Randverlauf 9 durchbricht, so daß dieses Loch ohne Schwierigkeiten wie die anderen mitgestanzt werden kann. Selbstverständlich kann der Fuß 2a auch noch weitere Schraubenlöcher 8, wie strichpunktiert angedeutet, aufweisen und es ist auch möglich, den Fuß 2a mit einer Fixiernase 11 auszustatten. Der Rand 9 des Fußes 2a verläuft kreisbogenförmig und definiert so einen Umfangskreis K, innerhalb dessen sich der ganze Fuß 2a befindet.

Gemäß dem Montagebeispiel nach Fig. 2 wird nun der Halter 1 in eine Wandbohrung B eingesetzt, deren Durchmesser dem Umfangskreis K des Fußes 2a entspricht, so daß der Befestigungsteil 2 des Halters 1 verdrehbar in der Bohrung B sitzt. Zur Fixierung wird in das Schraubenloch 8 eine Klemmschraube 5 mit Mutter und Beilagescheibe eingesetzt, wobei der Schraubenkopf 5a und die Beilagscheibe 5b sowohl den Fuß 2a als auch den an die Bohrung B angrenzenden Wandbereich W übergreifen und so den Halter in der Wand W festklemmen. Die exzentrische Lage der Schraube 5 ergibt gleichzeitig eine Verdrehsicherung, wobei durch ein Lockern der Klemmschraube 5 eine einfache Drehverstellung ohne Gefahr eines Herausfallens des Halters aus der Bohrung B möglich ist und ein Festziehen der Klemmschraube 5 die gewünschte Positionierung ergibt.

Gemäß dem Montagebeispiel nach Fig. 3 wird der Halter 1 mit seinem Befestigungsteil 2 auf die Wand W des Maschinenteils aufgesetzt und die Klemmschraube 5 einfach durch eine entsprechende Wandbohrung B hindurchgesteckt, so daß eine übliche Klemmverschraubung erfolgt. Hier wird zur Drehsicherung eine Zusatzbohrung Z für den Eingriff der Fixiernase 11 angeordnet.

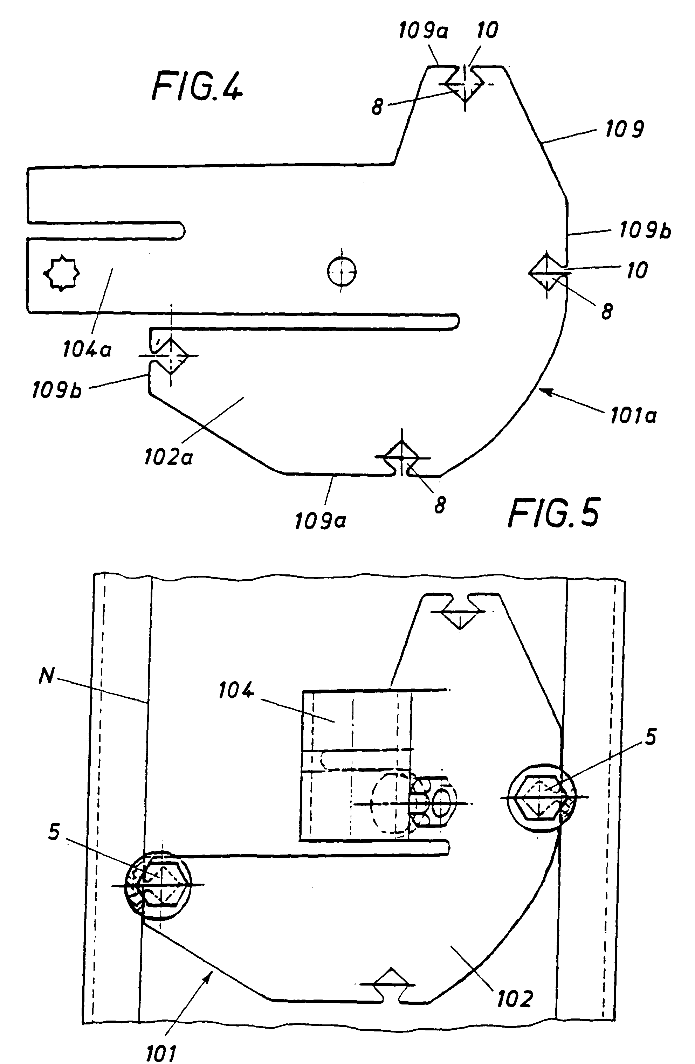

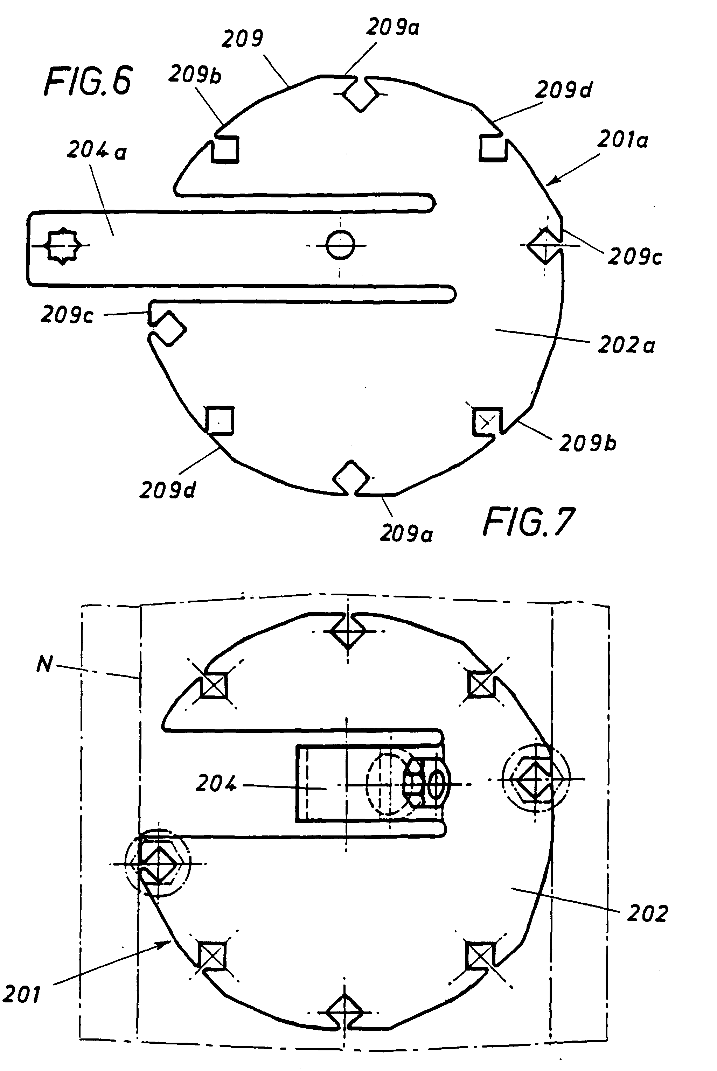

Der Halter 101 gemäß Fig. 4 und 5 mit seinem Befestigungsteil 102 und seinem Aufnahmeteil 104 besteht aus einem Zuschnitt 101a, der wiederum einen Lappen 104a zur Ausformung des Aufnahmeteiles 4 und einen Fußteil 102a zur Ausbildung des Befestigungsteils 102 umfaßt. Hier bildet der Fußteil 102a einen Rand 109, der zwei Paare einander gegenüberliegender, paralleler Geradabschnitte 109a, 109b aufweist, so daß der Halter 101, der eine als Aufnahmeteil 104 dienende, gegenüber dem flachen Befestigungsteil 102 aufgebogene Schelle aufweist, mit den zugehörenden Geradabschnitten 109a,b zwischen die Ränder einer Führungsnut N od.dgl. eingesetzt werden kann, wo über entsprechende Klemmschrauben 5 mit dem die Nutrandbereiche überlappenden Schraubenköpfen bzw. Beilagscheiben die Fixierung erfolgt. Die Geradabschnitte verhindern dabei eine Verdrehung des Halters innerhalb der Nut, wobei die beiden Geradabschnittpaare gegeneinander winkelversetzte Positionen innerhalb der Nut N einzunehmen erlauben. Auch hier sind die Schraubenlöcher 8 als eckige Löcher mit den Rand 109 durchbrechenden Ecken 10 ausgebildet.

Einen ähnlicher Halter 201 zeigen die Fig. 6 und 7, welcher Halter aus einem Zuschnitt 201a besteht, dessen Fuß 202a einen Rand 209 mit einer Mehrzahl von gegeneinander winkelversetzten Geradabschnittpaaren 209a - d bildet. Ein durch Einschnitte bis in den Fuß 202a reichender Lappen 204a läßt sich wiederum zu einer Schelle als Aufnahmeteil 204 des Halters 201 aufbiegen, so daß dieser Halter 201 mit seinem Befestigungsteil 202 in einer entsprechende Nut N in einer der Zahl der Geradabschnittpaare entsprechenden Mehrzahl von Winkelschritten verstellbar fixiert werden kann.

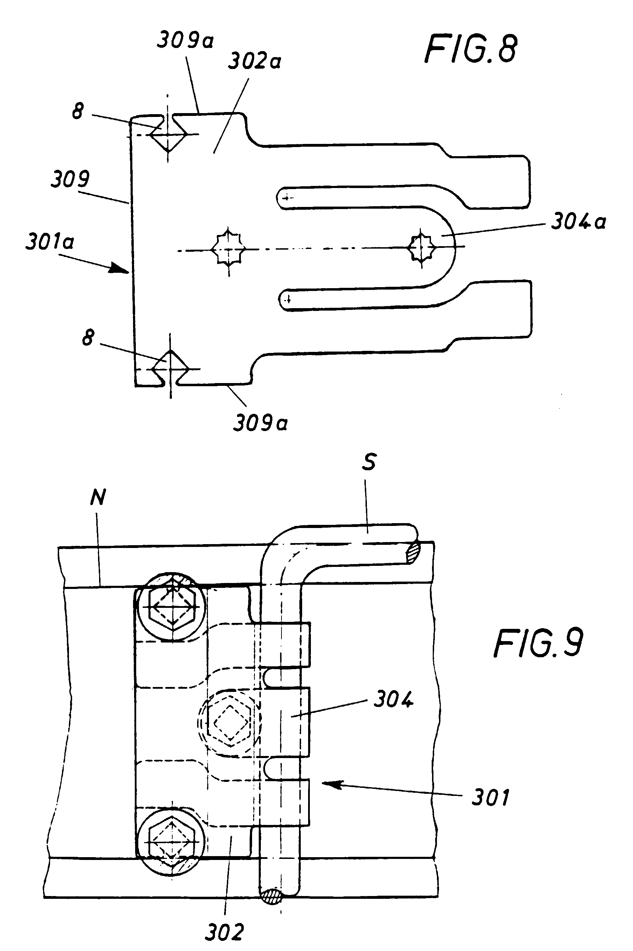

Der Halter 301 gemäß Fig. 8 und 9 weist ebenfalls einen in eine Nut N einsetzbaren Befestigungsteil 302 und einen schellenartigen Aufnahmeteil 304 zur Halterung eines abgewinkelten Stabes S auf. Der Zuschnitt 301a dieses Halters, der lediglich um 180° winkelversetzt montiert werden kann, weist einen etwa rechteckigen Fuß 302 mit einander gegenüberliegenden Geradabschnitten 309a des Randes 309 mit den entsprechenden Schraubenlöchern 8 sowie drei nebeneinanderliegende Zungen 304a zum Ausformen des Aufnehmteils 304 auf.

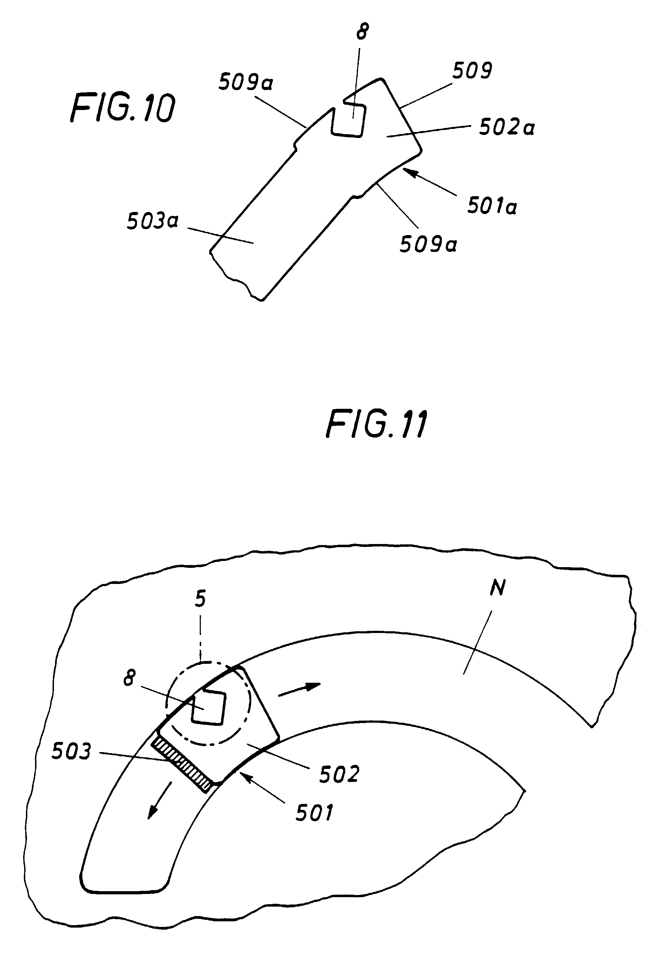

Im Ausführungsbeispiel nach Fig. 10 und 11 ist ein nur mit seinem Befestigungsteil dargestellter Halter 501 veranschaulicht, der in einer bogenförmigen Nut N eingesetzt und über eine Klemmschraube 5 fixiert werden kann. Dazu weist der Zuschnitt 501a einen Plattenteil 502a mit entsprechend bogenförmigen Randabschnitten 509a auf, so daß ein an die Nutenform angepaßter, der Nut entlang verschiebbar geführter Befestigungsteil 502 entsteht. Hier wird ein entsprechend eckiges Schraubenloch 8 im Bereich des Randes 509 angeordnet, um mit der Klemmschraube 5 ein überlappendes Festspannen zu ermöglichen. An den nur angedeuteten Stegteil 503 kann ein beliebiger Aufnahmeteil angeformt sein, wozu dann der Zuschnitt 501a einen an den Verbindungssteg 503a anschließenden Ansatz aufweisen müßte.

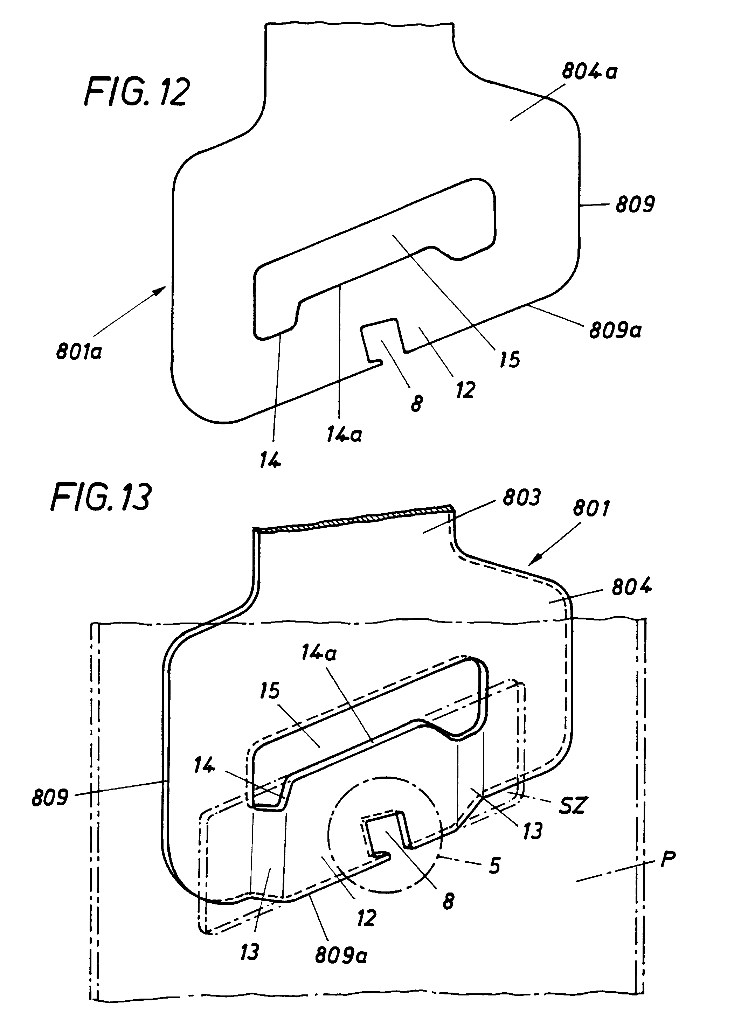

Wie beim Ausführungsbeispiel nach Fig. 12 und 13 ersichtlich, kann der Halter 801 einen Aufnahmeteil 804 besitzen, der zwischen einem Geradabschnitt 809a seines Randes 809 und einem dazu parallelen Längsschlitz 15 einen Aufnahmesteg 12 bildet. Dieser Aufnahmesteg 12 ist über endseitige Kröpfungen 13 parallel zu sich aus der Aufnahmeteilebene herausgebogen, so daß eine Anschlußplatte P od.dgl. mit einem entsprechenden Befestigungsschlitz SZ schiebeverstellbar auf den Aufnahmesteg 12 aufgesteckt und in der gewünschten Position mit einer Klemmschraube 5 fixiert werden kann. Der zugehörende Zuschnitt 801a braucht daher lediglich mit einem entsprechenden Randverlauf 809 und einem Längsschlitz 15 hergestellt zu werden, wobei die den Aufnahmesteg 12 begrenzende Schlitzkante 14 einen freigestellten Mittelabschnitt 14a bildet und der Geradabschnitt 809a ein Schraubenloch 8 aufweist. Der Halter 801 erlaubt so eine satte Auflage der Anschlußplatte P und eine ausreichende Klemmfixierung, wobei durch den Schrägverlauf des Aufnahmesteges 12 eine Seiten- und Höhenjustierung möglich ist.

## Patentansprüche

1. Halter (1) mit einem Befestigungsteil (2) und einem Aufnahmeteil (4), wobei Befestigungsteil und Aufnahmeteil durch Umformen eines Zuschnittes (la) hergestellt sind und der Befestigungsteil (2) und/oder der Aufnahmeteil (4) wenigstens ein Schraubenloch (7, 8) zum Einsetzen einer Klemmschraube (5) aufweisen, dadurch gekennzeichnet, daß das Schraubenloch oder zumindest eines der Schraubenlöcher als im Randbereich des Zuschnittes angeordnetes eckiges Loch (8), das mit einer seiner Ecken (10) den Randverlauf (9, 109, 209, 309, 509, 809) durchbricht, ausgebildet ist.

2. Halter nach Anspruch 1, dadurch gekennzeichnet, daß der Befestigungsteil (2) einen Befestigungsfuß (2a) bildet, der innerhalb eines durch Randbögen des Fußes bestimmten Kreises (K) liegt.

3. Halter nach Anspruch 2, dadurch gekennzeichnet, daß der Befestigungsfuß (2a) eine radial abstehende Fixiernase (11) aufweist.

4. Halter nach einem der Ansprüche 1 - 3, mit einem Befestigungsteil dessen Randverlauf wenigstens ein Paar einander gegenüberliegender, paralleler Geradabschnitte aufweist, dadurch gekennzeichnet, daß die Schraubenlöcher (8) im Bereich der Geradabschnitte (109a, 209a, 309a) vorgesehen sind.

5. Halter nach Anspruch 1, dadurch gekennzeichnet, daß der Aufnahmeteil (804) zwischen einem Geradabschnitt (809a) des Randverlaufes (809) und einem dazu parallelen Längsschlitz (15) einen Aufnahmesteg (12) bildet, der durch endseitige Kröpfungen (13) in eine mit Abstand zur Ebene des übrigen Aufnahmeteils (804) liegende Parallelebene herausgebogen ist und entlang der Schlitzkante (14) und/oder des Geradabschnittes (809a) ein Schraubenloch (8) aufweist.

6. Halter nach Anspruch 5, dadurch gekennzeichnet, daß der Aufnahmesteg (12) gegenüber der vertikalen Montagerichtung schräg verläuft, wobei vorzugsweise die Schlitzkante (14) und/oder der Geradabschnitt (809a) einen freigestellten Mittelabschnitt (14a) aufweisen.

## Claims

1. Holding device (1) with a fastening segment (2) and a retaining segment (4), whereby the fastening and the retaining segments are produced by reshaping a blank (1a), and the fastening segment (2) and/or retaining segment (4) possess at least one screw hole (7, 8) for inserting an attachment screw, and characterized by a screw hole, or at least one of the screw holes, which is placed at the edge of the blank and is designed as a mulit-cornered hole (8), whereby one of its corners (10) perforates the edge of the blank (9, 109, 209, 309, 509, 809).

2. Holding device according to claim 1 characterized by the fastening segment (2) forming a mounting base (2a) whose arced edge lies within a particular circle (K).

3. Holding device according to claim 2 characterized by a mounting base (2a) which has a fixation stub (11) projecting radially from it.

4. Holding device according to one of the claims 1 - 3 with a fastening segment whose edge possesses at least one pair of parallel, straight sections lying across from each other, and characterized by their screw holes (8) located near the straight sections (109a, 209a, 309a).

5. Holding device according to claim 1 characterized by the retaining segment (804) which forms a holding surface (12) between a straight section (809a) of the edge (809) and a longitudinal slot (15) parallel to it, whereby the slanted ends (13) of the holding surface are bent outward to form a plane parallel to, and raised above, the plane of the remaining retaining segment (804), and by a screw hole (8) located along the slot edge (14) and/or the straight section (809a).

6. Holding device according to claim 5 characterized by the holding surface (12) oblique to the vertical direction of mounting, whereby the slot edge (14) and/or the straight section (809a) preferably have a free middle section (14a).

## Revendications

1. Dispositif de retenue (1) comprenant une partie de fixation (2) et une partie de retenue (4), cependant que la partie de fixation et la partie de retenue sont fabriquées par déformation d'un flan découpé (la), et que la partie de fixation (2) et/ou la partie de retenue (4) présentent au moins un trou (7, 8) qui est destiné à l'introduction d'une vis de serrage (5), caractérisé par le fait que le trou destiné à la vis ou l'un au moins des trous destinés aux vis est réalisé sous la forme d'un trou polygonal (8) qui est disposé dans la région du bord du flan découpé et qui recoupe le tracé du bord (9, 109, 209, 309, 509, 809) par l'un de ses coins (10).

2. Dispositif de retenue selon la revendication 1, caractérisé par le fait que la partie de fixation (2) forme une semelle de fixation (2a) qui est située à l'intérieur d'un cercle (K) défini par les arcs du bord de la semelle.

3. Dispositif de retenue selon la revendication 2, caractérisé par le fait que la semelle de fixation (2a) présente un bec de fixation (11) qui fait saillie dans le sens radial.

4. Dispositif de retenue selon l'une des revendications 1 à 3, comprenant une partie de fixation dont le tracé du bord présente au moins une paire de parties rectilignes parallèles opposées l'une à l'autre, caractérisé par le fait que les trous (8) qui sont destinés aux vis sont prévus dans la région des parties rectilignes (109a, 209a, 309a).

5. Dispositif de retenue selon la revendication 1, caractérisé par le fait que la partie de retenue (804) constitue, entre une partie rectiligne (809a) du tracé du bord (809) et une fente longitudinale (15) parallèle à celle-ci, une traverse de retenue (12) qui est pliée selon des plis en S (13) à ses extrémités pour venir dans un plan parallèle situé à distance du plan du reste de la partie de retenue (804), et qu'elle présente, le long du bord (14) de la fente et/ou de la partie rectiligne (809a), un trou (8) qui est destiné à une vis.

6. Dispositif de retenue selon la revendication 5, caractérisé par le fait que la traverse de retenue (12) s'étend obliquement par rapport à la direction du montage qui est verticale, le bord (14) de la fente et/ou la partie rectiligne (809a) présentant de préférence une partie centrale libre (14a).
